# EUROPÄISCHE PATENTSCHRIFT

(11) **EP 2 420 378 B1**
(45) Veröffentlichungstag und Bekanntmachung des Hinweises auf die Patenterteilung: **24.07.2013**
(21) Anmeldenummer: 11166637.6
(22) Anmeldetag: 19.05.2011
(51) Int. Cl.: B29C 70/46, B29C 70/54

(54) **Verfahren und Vorrichtung zur Herstellung von Bauteilen aus faserverstärkten Kunststoffen**
Method and device for the manufacture of components made of fibre-reinforced plastic
Procédé et dispositif destinés à la fabrication de composants en matières synthétiques renforcés en fibres

(30) Priorität: 19.08.2010 DE 102010037062
(43) Veröffentlichungstag der Anmeldung: 22.02.2012
(73) Patentinhaber: MBB Fertigungstechnik GmbH, 48361 Beelen (DE)
(72) Erfinder: Düker, Martin, 33335 Gütersloh (DE); Bühlmeyer, Robert, 33442 Herzebrock-Clarholz (DE)
(74) Vertreter: Bittner, Thomas L.

(56) Entgegenhaltungen:
- EP-A1- 0 571 897
- DE-C1- 10 035 237
- US-A1- 2004 201 135
- US-A1- 2007 218 795

## Beschreibung

Die vorliegende Erfindung bezieht sich auf das Gebiet der Verarbeitung von Kunststoffen im Allgemeinen und im Speziellen auf das Formen von Kunststoffen, wobei die Kunststoffmaterialien Füllstoffe und Verstärkungen oder vorgeformte Teile aufweisen. Zur Verarbeitung vorgeformter Halbzeuge sind verschiedene Herstellverfahren aus dem Stand der Technik bekannt.

Die Erfindung bezieht sich auf ein Verfahren nach Anspruch 1 und eine Vorrichtung zur Durchführung eines solchen Verfahrens zur Herstellung von Bauteilen aus vorimprägnierten Halbzeugen, insbesondere aus vorimprägnierten Faser-Matrix-Halbzeugen, welche beispielsweise in Platten-, Band- oder Strangform vorliegen. Die Faserverbundwerkstoffe mit der größten wirtschaftlichen Bedeutung sind die glasfaserverstärkten Kunststoffe (GFK). Das Haupteinsatzgebiet für die naturfaserverstärkten Kunstoffe ist die Automobilindustrie, weil die Automobilhersteller das Bestreben haben, das Fahrzeuggewicht zu reduzieren, um sparsamere Fahrzeuge im Verbrauch herzustellen bzw. Energie zu sparen. Auch die kohlenstofffaserverstärkten Kunststoffe (CFK), welche als Halbzeuge Verwendung finden, seien hier genannt. Die Kenntnisse zu den Faserverbundwerkstoffen werden hier vorausgesetzt und können als bekannt dem Stand der Technik entnommen werden.

Aus dem Stand der Technik sind verschiedene Verfahren und Vorrichtungen zur Herstellung von faserverstärkten Bauteilen bekannt, die ein bestimmtes Verfahren und eine derartige Produktionsanlage voraussetzen. Eines der bekannten Verfahren ist das Resin-Transfer-Molding (RTM-Verfahren). Beim RTM-Verfahren werden die trockenen Verstärkungsfasern in Form von textilen Halbzeugen in ein beheizbares, druckdichtes und meist zweiseitiges Werkzeug eingelegt und durch das Schließen der Formhälften verpresst. Dann wird Harz unter Druck in das Werkzeug injiziert und das Bauteil nach einer entsprechenden Aushärtezeit entformt. Neben den Nachteilen der langen Aushärtezeit und dem hohen Reinigungsaufwand bei den eingesetzten Werkzeugen, entsteht der größte Nachteil bei diesem Fertigungsschritt durch die insgesamt zu hohe Zykluszeit, wenn es sich um Serienfertigung handelt. Zykluszeiten, wie sie in der automatisierten Blechumformung daher üblich sind, werden bei der Herstellung von faserverstärkten Kunststoffen mit dem RTM-Verfahren bei weitem nicht erreicht.

Eine Automatisierungstechnik soll hier Abhilfe schaffen. Daher offenbart die DE 100 35 237 C1 ein Verfahren und eine Produktionsanlage, die als naheliegender Stand der Technik angesehen wird. Das Verfahren und die Produktionsanlage dienen der Herstellung von schalenförmigen, faserverstärkten Kunststoffteilen. In dem beschriebenen Verfahren werden faserverstärkte, duroplastische Kunststoffe zur Herstellung von schalenförmigen Kunststoffteilen verwendet. Zur Herstellung solcher schalenförmigen, faserverstärkten duroplastischen Kunststoffteile wird eine automatisierte Produktionsanlage eingesetzt. Die schalenförmigen, faserverstärkten Kunststoffteile bestehen aus einer einlagigen, der Schalenform folgenden Endlosfasermatte und aus einer, die Fasern der Fasermatte allseits und porenfrei einbettenden, duroplastischen Kunststoffmatrix. Um eine Automatisierung zu erreichen, wird das Kernstück der Produktionsanlage, eine Umformpresse, in einer Tandembetriebsweise bestückt. Die Abwickelstation, der Industrieroboter, die Abschneidevorrichtung, Bereitstellungsgefäße und Ablagestationen sind daher doppelt vorzuhalten. Der Fertigungsablauf für die Herstellung eines schalenartigen, faserverstärkten duroplastischen Kunststoffteils ist folgender. In einer Abwickelstation wird von einer Vorratsrolle durch eine Abschneidevorrichtung eine Fasermatte abgeschnitten. Diese Fasermatte wird von zwei Industrierobotern auf einem Spannrahmen, worunter sich eine Matrize, die sich auf einer horizontalen Führung befindet, abgelegt. Fasermatte, Spannrahmen und Matrize werden als Einheit bezeichnet. Im Anschluss daran wird diese Fasermatte mit Hilfe eines Roboters, der mit einer steuerbaren Auftragsdüse bestückt ist, mit einem reaktionsfähigen Matrixharz besprüht. Nach dem Sprühvorgang wird die horizontal bewegliche Einheit in die Formpresse gefahren, unter der Patrize positioniert und das Formwerkzeug geschlossen. Beim Schließen des Formwerkzeuges wird die mit Matrixharz besprühte Fasermatte in die gewünschte Schalenform umgeformt. Um eine optimale Ausformung des schalenförmigen, faserverstärkten duroplastischen Kunststoffteil zu erhalten, ist es notwendig, das Werkzeug zu evakuieren um ein Vakuum zu erzielen und das Werkzeug zu erwärmen. Hierbei muss die getränkte Fasermatte im Formwerkzeug eine Zeitspanne gehalten werden, damit ein thermisches Aushärten des Matrixharzes erfolgen kann. Die Patrize und Matrize sind daher beheizbar ausgebildet und werden während des Produktionsbetriebes auf Aushärtetemperatur temperiert. Anschließend wird das Formwerkzeug abgekühlt und die Einheit aus der Formpresse in eine Position gefahren, wo ein Roboter das ausgehärtete Kunststoffteil entnimmt und einer Ablagestation zuführen kann. Von der Ablagestation aus wird das Kunststoffteil einer weiteren Bearbeitungsstation zugeführt, um das Abtrennen des Zuschnittrandes vorzunehmen. Dieser Arbeitsschritt erfolgt jedoch in einer gesonderten Arbeitsstation außerhalb der vorgenannten Produktionsanlage. Diese Arbeitsstation ist notwendig, um ein fertig verwendbares Produkt zu erhalten. Auch notwendige Öffnungen in dem Kunststoffteil können erst nach der Produktionsanlage, um ein fertiges Produkt zu erhalten, mit weiteren Arbeitsstationen eingebracht werden.

Für die Bestückung der Formpresse mit einer getränkten Fasermatte und zur Entnahme eines schalenförmigen Kunststoffteils stehen verschiedene Vorrichtungen in Form von Industrierobotern zur Verfügung, welche den Automatisierungsgrad der Produktionsanlage ausmachen. Nachteilig wirken sich aber weiterhin auf die Herstellzeit eines Produktes die lange Aushärtezeit, die Abkühlphase und die Reinigung des Formwerkzeuges aus. Des Weiteren ist es notwendig und erforderlich, das Produkt in weiteren Arbeitsstationen komplett fertig zu stellen. Ausgehend von dem geschilderten Stand der Technik ist es Aufgabe der Erfindung, ein Verfahren und eine Vorrichtung in Form einer Fertigungsanlage zum Herstellen von Bauteilen aus faserverstärkten, Kunststoffen zu entwickeln, welche einen hohen Automatisierungsgrad und eine kurze Zykluszeit aufweist, sowie ein fertiges Produkt mit niedrigen Stückkosten bei der Herstellung liefert.

Erfindungsgemäß wird dieses Problem bezüglich des Verfahrens durch die kennzeichnenden Merkmale des Patentanspruchs 1 und bezüglich der Vorrichtung gemäß der kennzeichnenden Merkmale des Patentanspruchs 4 gelöst. Vorteilhafte Ausgestaltungen und Weiterbildungen der Erfindung ergeben sich aus den nachstehenden Unteransprüchen und der nachfolgenden Beschreibung.

Die Lösung der Aufgabe besteht also darin, den Nachteil der heute vorhandenen Produktionsanlagen zu vermeiden und einen Fertigungsprozess für hoch beanspruchte Bauteile aus faserverstärkten Kunststoffen für die Serienfertigung zu entwickeln, bei dem ein Endprodukt entsteht. Um einen hohen Automatisierungsgrad und eine kurze Zykluszeit bei der Herstellung von faserverstärkten Kunststoffbauteilen zu erreichen und die einzelnen Fertigungsschritte zeitlich anzugleichen, ist es notwendig, eine Vielzahl von Aufgaben zu lösen. Zur Lösung der Aufgaben sind Kenntnisse aus der Faserverbundwerkstofftechnik, der Metallumformung, der Automatisierungs- und der Fördertechnik erforderlich, damit ein Faserverbundwerkstoff eine automatisierte Fertigungsstrecke mit kurzer Zykluszeit durchlaufen kann.

Eine erste Aufgabe der Erfindung besteht darin, die lange Aushärtezeit des faserverstärkten Kunststoffteils im Werkzeug und die hohe Reinigungszeit des Werkzeuges in der Umformpresse zu vermeiden. Zur Lösung der Reduzierung der Zykluszeit wird erfindungsgemäß vorgeschlagen, einen anderen Faserverbundwerkstoff zu wählen. Der Erfindungsgedanke besteht darin, an Stelle einer duroplastischen Matrix eine thermoplastische Matrix zu verwenden. Zur thermoplastischen Matrix wird im nächsten Absatz noch näher ausgeführt.

Die zweite Aufgabe der Erfindung wird dadurch gelöst, dass die Herstellung eines Faserverbundwerkstoffes von der Herstellung eines fertigen Kunststoffbauteiles entkoppelt wird. Diese Entkoppelung wird dadurch erreicht, dass ein sogenanntes Organoblech im Fertigungsprozess eingesetzt wird. Das Organoblech findet als vorgefertigtes Faser-Matrix-Halbzeug Verwendung. Bei diesem Halbzeug handelt es sich um blechähnliche, quasi endlose Bahnen, die aus Matten aus anorganischen Fasern, insbesondere Glas-, Karbonfasern und Hybridstrukturen, mit einem Thermoplast als Matrix bestehen und meist im Coil oder Tafeln an den Weiterverarbeiter angeliefert werden. Daraus werden werkstückentsprechende Tafeln oder Formplatinen in gewünschten Abmessungen hergestellt. Ein solches Faser-Matrix-Halbzeug bildet also einen Faserverbundwerkstoff, welcher im Allgemeinen aus zwei Hauptkomponenten, einer einbettenden Matrix sowie verstärkenden Fasern, gebildet wird, wodurch ein Mehrphasen- oder Mischwerkstoff entsteht. Vorzugsweise finden faserverstärkte Kunststoffe (FVK) mit thermoplastischer Matrix als Halbzeuge Anwendung. Thermoplastische Halbzeuge sind beispielsweise glasmattenverstärkte Thermoplaste (GMT). Diese Halbzeuge lassen sich nachträglich umformen, weil sich dieser thermoplastische Faserverbundwerkstoff bei erhöhter Temperatur erweichen lässt, wodurch diese Halbzeuge sich in erstaunlichem Ausmaß an räumlich vorgegebene Oberflächenkonturen einer Kavität anpassen. Dieser Anpassungsvorgang ist ähnlich dem Anpassungsvorgang eines Bleches im Tiefziehprozess zu sehen. Zum Umformen der Halbzeuge sind zwei- oder mehrgeteilte Formwerkzeuge notwendig. Die Kenntnisse der Herstellung von Faserverbundwerkstoffen, als eigenständiges Konstruktionsmaterial bestehend aus Fasern, welche die Kräfte aufnehmen und einer die Fasern einbettenden Matrix, wird als bekannt vorausgesetzt. Die Matrix umgibt die Fasern, die durch Adhäsiv- oder Kohäsivkräfte an die Matrix gebunden sind. Als Verstärkungsfasern kommen anorganische-, organische-, metallische-, oder Naturfasern in Betracht. Als Matrix werden beispielsweise Duromere, Elastomere oder Thermoplaste als Harze eingesetzt. Daher wird grundsätzlich bei den faserverstärkten Kunststoffen zwischen duroplastischer-, thermoplastischer- und elastomerer Matrix unterschieden. Faserverstärkte Kunststoffe mit einer thermoplastischen Matrix lassen sich also nachträglich umformen oder verschweißen. Nach dem Abkühlen der Matrix sind faserverstärkte Kunststoffe mit thermoplastischer Matrix einsatzbereit. Sie erweichen jedoch bei erhöhter Temperatur. Die Lösung der der zweiten Aufgabe besteht also darin, dem Fertigungsprozess thermoplastische Faser-Matrix-Halbzeuge in Form von Tafeln mit den entsprechenden Abmessungen für das herzustellende Kunststoffbauteil zur Verfügung zu stellen, um eine Serienfertigung von faserverstärkten Kunststoffbauteilen zu ermöglichen. Zur Lösung der ersten und zweiten Aufgabe wurden die Kenntnisse aus der Faserverbundwerkstofftechnik angewendet.

Um nun eine Serienfertigung von faserverstärkten Kunststoffbauteilen mit thermoplastischer Matrix zu realisieren, ist es notwendig, den Fertigungsprozess erfindungsgemäß ähnlich dem Fertigungsprozess der Metallumformung zu gestalten und zu automatisieren.

Dazu musste eine weitere Aufgabe der Erfindung gelöst werden. Die Aufgabe besteht darin, diese Tafeln in einer Fertigungsanlage so bereitzustellen, dass eine automatisierte Verarbeitung in einem getakteten Transferprozess ermöglicht wird. Dabei sollten die Nachteile aus dem Stand der Technik, die Bereitstellung des Ausgangsmaterials und die Transportvorrichtung, bestehend aus zwei teuren Industrierobotern, vermieden werden. Zur Lösung dieser Aufgabe wurde vorgeschlagen, hierzu eine Vorrichtung in Form eines Rohlingspeichers der als Stapelmagazin ausgebildet ist, für die erste Stufe, der Bereitstellungstufe, zu entwickeln. Das Stapelmagazin kann eine Vielzahl von Tafeln aufnehmen und bereitstellen, bzw. einzeln abgeben. Dieses Stapelmagazin wurde dann in die erfindungsgemäße Fertigungsanlage integriert und somit Bestandteil dieser Fertigungsanlage, um einen durchgehenden Fertigungsprozess sicherzustellen. Zur Sicherstellung eines durchgehenden Fertigungsprozesses mit einheitlichem Arbeitszyklus wurde rechts und links der einzelnen Fertigungsstufen, in Längsrichtung betrachtet, eine Transferschiene 1, II, beginnend bei der Bereitstellungsstufe und endend bei der Ablagestufe, angeordnet. Zwischen den Transferschienen I, II befinden sich einerseits die Vorrichtungen und Werkzeuge und andererseits eine, an den Transferschienen angeordnete, mindestens eine verschiebbare Transportvorrichtung, vorzugsweise zwei, aber auch mehrstufige Transportvorrichtungen (abhängig von Bauteilgeometrie und Pressengröße) die das Handling der Halbzeuge bis zum fertigen Produkt übernehmen, sind denkbar. Nähere Angaben zur Transportvorrichtung können der Figurenbeschreibung 1 entnommen werden. Die Entnahme- und Ablegemittel der Transportvorrichtung können eine Tafel erfassen und mit Hilfe der Vorsatzschiene entlang der Transferschiene transportieren und auf der nächsten Fertigungsstufe ablegen. Ein erfindungsgemäßer Schritt zur Erhöhung des Automatisierungsgrades wurde mit dem, in den Fertigungsprozess integrierten Stapelmagazin und der Transportvorrichtung erreicht. Aufgrund der kurzen Greifwege für die Entnahme- und Ablegemittel und der kurzen Verfahrwege zwischen der Bereitstellungsstufe und der ersten und zweiten Fertigungsstufe, sowie der kurzen Verfahrwege zwischen den weiteren Fertigungsstufen in der Transferpresse, wird nur eine geringe Zykluszeit benötigt, die den Anforderungen des Arbeitszyklus bei der Metallumformung annähernd entspricht. Die erste und zweite Fertigungsvorstufe besteht aus einer Vorrichtung I, II mit einem aus dem Stand der Technik bekannten Spannrahmen. Die von den Klemmgreifern der Transportvorrichtung auf der Vorrichtung I, II mit dem Spannrahmen I und II abgelegte Tafel wird von den mechanischen Greifern der Vorrichtung I, II erfasst und vom Spannrahmen I und II gespannt. Aufgrund der zuvor aufgezeigten Lösungen entfällt das zeitaufwendige Besprühen der gespannten Tafeln mit Matrixharz.

Aus dem Stand der Technik ist nun bekannt, dass im nächsten Arbeitsschritt das zugeschnitte Werkstück aus Fasern, mit Matrixmaterial besprüht, in ein Formwerkzeug zum Erwärmen eingebracht wird. Dabei werden beide Werkstoffe erwärmt und es kommt zum Auslösen einer Polymerisation des Matrixmaterials und die Fasern und das Matrixmaterial verkleben miteinander, so dass ein Faserverbundbauteil entsteht. Hierzu wird beispielsweise ein Autoklav oder gemäß der DE 100 35 237 C1 eine Umformpresse benutzt.

Da ein Besprühen der Tafeln mit Matrixmaterial erfindungsgemäß nicht mehr notwendig ist und die Tafeln bereits aus einem Faserverbundwerkstoff mit thermoplastischem Matrixmaterial bestehen, werden nur noch eine Erwärmung der Faser-Matrix-Halbzeuge, aber kein Erhitzen der Werkzeugform mehr erforderlich.

Hier stellt sich nun die weitere Aufgabe, eine Heizquelle zu entwickeln, welche einen hohen Automatisierungsgrad und einen Arbeitszyklus aufweist, der dem nachfolgenden Fertigungsprozess entspricht. Diese Aufgabe wurde gelöst, indem erfindungsgemäß vorgeschlagen wurde, das Werkzeug der Heizquelle bereits als erste Fertigungsstufe mit in die Transferpresse zu integrieren. Diese erste Fertigungsstufe entspricht somit einer Heizstation und ist erfindungsgemäß in ein unteres und ein oberes Heizfeld aufgeteilt. Das Unterteil der Heizquelle befindet sich mit den Formwerkzeugunterteilen der anderen Fertigungsstufen auf der Grundplatte der Transferpresse, während das Oberteil der Heizquelle sich oberhalb des Spannrahmen befindet. Die Heizfelder werden nach der Bestückung durch ein Halbzeug seitlich durch ein Isolierschild abgeschottet. Das bedeutet, dass sich ein Heben und Senken der Kopfplatte an der Transferpresse nicht auf den Heizvorgang auswirkt. Das untere Heizfeld wird stationär auf dem Unterteil montiert und das obere Heizfeld wird oberhalb vom Spannrahmen aufgehangen. Vorteilhafterweise können auch zwei Heizstationen als Fertigungsstufen in die Transferpresse integriert werden. Zwei Heizstationen bieten den Vorteil, dass größere Tafeln von Faser-Matrix-Halbzeugen zwei Heizstationen durchlaufen können, um die notwendige Erweichungstemperatur des Matrixharzes zu erreichen und um den Arbeitszyklus der nachfolgenden Fertigungsstufen einzuhalten. Für einfache Bauteile aus kleineren Tafeln reicht die Benutzung einer Heizstation. In dem Fall würde immer nur eine Heizstation von der Transportvorrichtung aus der Bereitstellungsstufe angefahren und mit einer Tafel bestückt. Alternativ kann die Heizstation auch seitlich von den Formstufen angebracht werden. In diesem Fall fährt der Spannrahmen 90 Grad zur Transferschiene.

Wird die Kopfplatte der Transferpresse nun im ersten Öffnungshub angehoben, fährt die Transportvorrichtung von der Bereitstellungsstufe zur ersten Fertigungsstufe und legt eine Tafel auf dem Spannrahmen I der Heizstation ab. Sind zwei Heizstationen vorhanden, werden beide Heizstationen mit einer Tafel bestückt. Die Tafeln werden, wie zuvor beschrieben, von den mechanischen Greifern der Vorrichtung I, II erfasst und im Rahmen I, II gespannt. Der Heizvorgang beginnt. Das obere Heizfeld um ein bestimmtes Maß von der Tafel beabstandet. Das Heizfeld der Heizquelle ist somit von der Tafel distanziert angeordnet. Bereits während der Länge des Hubes, also während der Abwärts- und Aufwärtsbewegung der Kopfplatte der Transferpresse, wird die Dauer des Heizvorganges gesteuert.

Die Anwendung der Spannrahmentechnik auf den Vorrichtungen I, II ist aber nur notwendig, wenn die Tafeln komplett erwärmt werden müssen. D.h., der Transfer der Tafeln zwischen der Fertigungsstufe der ersten Heizstation und der Fertigungsstufe der zweiten Heizstation würde nicht über die Transportvorrichtung entlang der Transferschiene erfolgen, sondern über einen separaten Transfer der Spannrahmen. Ansonsten werden die Halbzeuge und die faserverstärkten Kunststoffbauteile von einer Fertigungsstufe zur nächsten Fertigungsstufe mittels einer Transporteinrichtung entlang der Transferschiene transportiert. Die Automatisierung des Transportes ist auf jeden Fall sichergestellt, um den Arbeitszyklus der Transferpresse einzuhalten.

Um einen hohen Automatisierungsgrad bei der Herstellung von Bauteilen aus faserverstärkten Kunststoffen zu erreichen, ausgehend von den vorgenannten Halbzeugen bis hin zum fertigen Endprodukt, wird zur Lösung der Aufgabe vorgeschlagen, erfindungsgemäß die einzelnen Fertigungsstufen in eine gemeinsame Transferpresse zu integrieren. Durch die Integration wird bei jedem Hub der Transferpresse ein fertiges Bauteil aus faserverstärkten Kunststoffen hergestellt. Um aber ein fertiges Bauteil am Ende einer Transferpresse zu erhalten, ist es notwendig, die Herstellung des Bauteiles in einzelne Fertigungsstufen aufzuteilen. Die Aufteilung der Fertigungsstufen hat derart zu erfolgen, dass in jeder einzelnen Fertigungsstufe ein Bearbeitungsschritt erfolgen kann, der zeitlich mit den anderen Bearbeitungsschritten in den anderen Fertigungsstufen annähernd übereinstimmt. Dieses ist eine weitere Voraussetzung der Lösung, weil der Arbeitszyklus von der Transferpresse vorgegeben wird. Erfindungsgemäß ist die Fertigungsstufe der Heizstation bereits in der Transferpresse integriert und stellt die erste Fertigungsstufe 1 dar. Weil die Fertigungsstufe 1, das Erwärmen des eingesetzten Halbzeuges, gegenüber den anderen Fertigungsstufen 2-6, beispielsweise den Form- und Zerspanungsstufen 3-4, wobei die Zerspanungsstufen 3-4 aus einer Schneidstation und einer Schneid- oder Lochstation besteht, idR. zeitlich am längsten dauert, kann diese Fertigungsstufe 1 aus zwei Heizstationen, wie zuvor beschrieben, bestehen.

Beim zweiten Öffnungshub der Transferpresse, beispielhaft davon ausgehend, dass die Transferpresse sechs Fertigungsstufen 1 - 6 enthält, die alle den gleichen Arbeitszyklus aufweisen, werden gleichzeitig alle Werkzeuge der Fertigungsstufen 1-6 geöffnet. Die erste Fertigungsstufe 1, die Heizstation, wurde, wie zuvor beschrieben, mit einer Tafel bestückt, um diese zu erwärmen. Die erwärmte Tafel aus der ersten Fertigungsstufe 1 wird weiter in Durchlaufrichtung zur nächsten Fertigungsstufe 2 in der Transferpresse transportiert. Der Transport erfolgt mit Hilfe einer Transportvorrichtung oder, wenn die Tafel im Spannrahmen befestigt ist, über den separaten Transfer mit dem Spannrahmen zur nächsten Fertigungsstufe 2 der Umformstation. Gleichzeitig wird eine Tafel aus der Bereitstellungsstufe, dem Stapelmagazin, zur Fertigungsstufe 1 der Heizstation transportiert und dort abgelegt.

Beim nächsten Schließhub der Kopfplatte der Transferpresse erfolgt in der ersten Fertigungsstufe 1 wieder das Erwärmen einer Tafel und gleichzeitig, in der zweiten Fertigungsstufe 2, erfolgt in der Umformstation mit den Formwerkzeugen ein Pressvorgang, wobei die vorgewärmte Tafel die geometrischen Abmessungen des Stempels und der Matrize annimmt. Die Zykluszeit der Umformstation ist gegenüber der Umformstation aus dem Stand der Technik der DE 100 35 237 C1 wesentlich geringer, weil das Formwerkzeug nicht zusätzlich erwärmt werden muss, wodurch die Abkühlungszeit des Halbzeug-Bauteiles auf ein Minimum reduziert werden kann. Dieser erfindungsgemäße Vorteil entsteht dadurch, dass kein RTM-Werkzeug eingesetzt werden muss, sondern ein Tiefziehwerkzeug. Des Weiteren ist das Formwerkzeug erfindungsgemäß mit einer wärmabweisenden Antihaftbeschichtung ausgestattet. Die Antihaftbeschichtung verhindert, dass sich das Werkzeug erwärmt.

Im nächsten Öffnungshub der Transferpresse wird nach dem Formprozess das Halbzeug-Bauteil in Durchlaufrichtung in die nächste Fertigungsstufe 3 der ersten Zerspanungsstufe, bestehend aus einer Schneidstation, entlang der Transferschienen transportiert und dort eingelegt. Gleichzeitig erfolgt, wie zuvor beschrieben, auch das Bestücken der Umformstation und der Heizstation.

Beim nächsten Schließhub der Transferpresse wird das vorgewärmte Halbzeug-Bauteil, wie bei der Metallfertigung, in der Schneidstation geschnitten und gelocht. Die Zuschnitte können von den Werkzeugen in Arbeits- und Schieberichtung ausgeführt werden. D.h., das Schneiden und Lochen kann sowohl in vertikaler und/oder horizontaler Richtung erfolgen. Die Schneidwerkzeuge sind beschichtet, um eine hohe Standzeit bzw. ein große Zahl von Arbeitszyklen zu gewährleisten. Nach dem Öffnungshub werden alle Halbzeug-Bauteile mit Hilfe der Transportvorrichtung entlang der Transferschienen wieder weitergelegt.

Die nächste Fertigungsstufe 4 in der Transferpresse gehört mit zur Zerspanungsstufe und besteht ebenfalls, wie bei der Fertigungsstufe 3, aus einer Schneidstation. Damit ist ein mehrstufiges Schneiden und Lochen des Halbzeug-Bauteiles, auch hier in vertikaler und/oder horizontaler Richtung, möglich. Auch Schiebeoperationen können mit den Schneidwerkzeugen durchgeführt werden, wodurch ein Schneiden in abgewinkelten Bereichen ermöglicht wird.

Die nächsten Fertigungsstufen 5-6 in der Transferpresse ermöglichen eine partielle Umformung am Halbzeug-Bauteil. Das geschnittene und gelochte Halbzeug-Bauteil wird beim nächsten Öffnungshub der Transferpresse aus der zweiten Schneidstation in die darauf folgende Fertigungsstufe 5, eine partielle Heizstation, weitergelegt. Diese Fertigungsstufen 5-6 sind erforderlich, wenn es sich um komplexe faserverstärkte Bauteile handelt. Ein komplexes Bauteil benötigt mehrstufige Formoperationen mit Tiefziehwerkzeugen. Diese Mehrstufigkeit wird durch den Einsatz der Schablonen-Heiztechnik erreicht. Die Schablonen-Heiztechnik funktioniert auf folgende Weise. Die Strahlungsheizelemente werden oberhalb der formschlüssigen dünnwandigen Stahlformaufnahme angeordnet. Im Bereich der Heizquelle wird die Formaufnahme freigemacht, um eine partielle Erwärmung des weiter zu verformenden Bereiches am faserverstärkten Kunststoffbauteil zu erreichen. Nun kann der partielle Pressvorgang erfolgen. Durch den Pressvorgang fährt das, mit dem Absenken der Transferpresse am Oberteil der Kopfplatte federnd angeordnete Heizfeld, von oben auf das Halbzeug-Bauteil und bleibt im geschlossenen Formwerkzeug distanziert vom Halbzeug-Bauteil beabstandet. Durch den Schließhub der Transferpresse wird die Dauer des Heizvorganges des gefederten Heizfeldes gesteuert. Bei diesem Schließhub sind bereits fünf der sechs Fertigungsstufen 1-6 mit einem Halbzeug-Bauteil bestückt

Beim nächsten Öffnungshub werden durch Weiterlegung der Halbzeug-Bauteile in Durchlaufrichtung aus den fünf Fertigungsstufen zur nächsthöheren Fertigungsstufe alle sechs Fertigungsstufen 1-6 mit einem zu fertigenden Bauteil bestückt. Alle Halbzeug-Bauteile wechseln jetzt ihre Fertigungsstufe 1-6 mit Hilfe der zwischen den Transferschienen angeordneten Transportvorrichtung beziehungsweise mit Hilfe der Spannrahmentechnik.

Die letzte Fertigungsstufe 6 besteht aus einer zweiten Umformstufe. Das partiell vorgewärmte Halbzeug-Bauteil wird beim Schließhub der Transferpresse, durch den Pressvorgang des Stempels gegen den Federboden an den Abstellbacken entlang, partiell geformt. Das Formwerkzeug in der Umformstufe 2 kann, anstelle der Formstufen, auch Fügestufen enthalten oder eine Kombination von beidem. Fügestufe bedeutet, dass zusätzliche Bauteile zum Komplettieren des Halbzeug-Bauteils hinzugefügt werden können. Die Verbindung zwischen dem Halbzeug-Bauteil und einem hinzugefügten Bauteil kann auf unterschiedliche Art und Weise erfolgen, beispielsweise durch Kleben, Nieten oder Schweißen. Anders wie bei der Metallumformung notwendig, werden die Halbzeug-Bauteile während des Fertigungsvorganges in der Transferpresse, ohne Anbringung von Schmierstoff auf der Oberfläche der Halbzeug-Bauteile, geformt. Dieses hat den großen Vorteil, dass die Halbzeug-Bauteile vor der Fertigungsstufe 6 der zweiten Umformstufe bzw. Fügestufe nicht gereinigt werden müssen, wodurch die Zykluszeit der Transferpresse zur Herstellung eines Bauteiles wiederum gesenkt werden kann.

Nach dem Öffnungshub wird aus der sechsten Fertigungsstufe 6 ein fertiges Bauteil, hergestellt aus einem faserverstärkten Kunststoff, entnommen und zur nachfolgenden Ablagestation transportiert. Der Transport der fertigen Bauteile erfolgt mittels der Klemmgreifer der Transportvorrichtung. Die Ablagestation kann aus einem Förderband bestehen, welches die Bauteile abtransportiert und einer Sammelstelle zuführt. Die Sammelstelle kann aus verschiedenen Behältnissen bestehen, die in einer Kontrollstation lagern, auf die hier nicht näher eingegangen wird.

Der Arbeitszyklus einer Transferpresse, ausgestattet mit den zuvor beschriebenen Werkzeugen für die einzelnen Fertigungsstufen, lässt sich wie folgt zusammenfassend beschreiben.

Der Arbeitszyklus einer Transferpresse besteht aus dem Hub der Transferpresse, der aus einem Schließ- und einem Öffnungshub gebildet wird. Zu Beginn der Beschickung einer Transferpresse befindet sich diese im geöffneten Zustand. Mit dem ersten Schließhub wird die in der Heizstation abgelegte Tafel erwärmt. Im zweiten Schließhub wird bereits eine Tafel erwärmt und eine erwärmte Tafel umgeformt. Im dritten Schließhub erfolgen eine Tafelerwärmung, eine erste Umformung und ein erster Zuschnitt der Kontur. Im vierten Schließhub erfolgen eine Tafelerwärmung, eine erste Umformung, ein erstes Zuschneiden der Kontur und ein zweiter Zuschnitt, vorzugsweise ein Lochen des Halbzeug-Bauteiles. Mit dem fünften Schließhub kommt zu der ersten Erwärmung einer Tafel, eine Umformung einer Tafel, ein erster und zweiter Zuschnitt eines Halbzeug-Bauteiles, eine weitere partielle Erwärmung eines Halbzeug-Bauteiles hinzu, die im sechsten Schließhub mit einer zweiten Umformung und/oder Hinzufügung zusätzlicher Bauteile endet. D.h., nach dem sechsten Öffnungshub bzw. nach dem sechsten Arbeitszyklus der Transferpresse verlässt ein fertiges Bauteil die Fertigungsanlage, wobei die Bereitstellung bzw. die Bestückung der ersten Fertigungsstufe mit einer Tafel und die Entnahme des fertigen Bauteiles aus der letzten Fertigungsstufe ebenfalls im gleichen Arbeitszyklus der Transferpresse erfolgt.

Zusammenfassend lässt sich ausführen, dass die Summe der einzelnen Lösungen eine erfindungsgemäße Fertigungsanlage für die Fertigung von faserverstärkten Bauteilen ergibt. Bei der Herstellung faserverstärkter Bauteile aus Thermoplastmatrix lässt sich bei der erfindungsgemäßen Verknüpfung der Fertigungsstufen 1-6 ein Arbeitszyklus erreichen, der, aufgrund der kurzen Abkühlzeiten der Bauteile, deutlich kürzere Prozesszeiten aufweist, als die aus dem Stand der Technik bekannten Prozesszeiten. Durch ein effizientes Heizsystem in Verbindung mit einem geschickten Materialhandling und der Verwendung von sogenannten Organoblechen, lässt sich in einer Transferpresse ein automatisierter Prozess mit vergleichsweise extrem kurzen Zykluszeiten realisieren. Durch eine geschickte Umformung im Werkzeug, die notfalls mehrstufig mit kombinierten Schneid- und Lochprozessen erfolgen kann, wird ein bisher nicht erreichbarer Automatisierungsgrad ermöglicht. Des Weiteren wird die Einhaltung enger Toleranzen für das endkonturgenaue Produkt mit komplexer Geometrie erreicht, weil keine Schrumpfung des Harzes im erfindungsgemäßen Fertigungsprozess erfolgt. Die Integrationsmöglichkeit von zusätzlichen Bauteilen ist enorm. Bei komplexeren faserverstärkten Kunststoffbauteilen kann die Transferpresse noch weitere Fertigungsstufen umfassen. Die zusätzlichen Fertigungsstufen müssen aber das Erfordernis des gleichen Arbeitszyklus der Transferpresse erfüllen. D.h., der durchzuführende Bearbeitungsschritt und das oder die Werkzeuge sind derart zu gestalten, dass die von der Transferpresse extrem kurze vorgegebene Zykluszeit eingehalten werden kann.

Die Erfindung betrifft daher ein Verfahren zur Herstellung von Bauteilen aus vorimprägnierten Halbzeugen, vorzugsweise einem thermoplastischen Faser-Kunststoff-Verbund, beispielsweise einem CFK- oder GMT-Verbund, mit Hilfe einer Fertigungsanlage und mit den folgenden Schritten:
- Bereitstellung von Halbzeugen in mindestens einem Rohlingspeicher,
- Erfassen eines Halbzeuges mit Hilfe eines, an einer Transportvorrichtung angeordneten Entnahme- und Ablegemittels und Transportieren des Halbzeuges mit Hilfe einer, an einer verschiebbaren Transportvorrichtung angeordneten Vorsatzschiene entlang einer Transferschiene und Ablegen des Halbzeuges in eine erste Vorrichtung I mit Spannrahmen 1 und Spannen des Halbzeuges in diesem Spannrahmen I mit Hilfe mechanischer Greifer, dadurch gekennzeichnet, dass

- eine zweite Vorrichtung II mit Spannrahmen II mit einem Halbzeug bestückt wird und das Halbzeug mit Hilfe der mechanischen Greifer im Spannrahmen gespannt wird, wobei der Spannrahmen den Transfer des Halbzeuges zur Heizstation I, die sich in einer getakteten Transferpresse befindet, übernimmt,
- in der Heizstation I erfolgt das Erwärmen des Halbzeuges, das nach dem Erwärmen mit Hilfe des Spannrahmentransfers in der Transferpresse der Umformstation zugeführt wird,
- in der Umformstation I erfolgt das Umformen des vorgewärmten Halbzeuges zu einem Halbzeug-Bauteil, wobei der anschließende Transfer des Halbzeug-Bauteiles mit Hilfe der Transporteinrichtung entlang der Transferschienen zur Zerspanungsstation I erfolgt,
- in der Zerspanungsstation I erfolgt der Zuschnitt der Außenkontur des Halbzeug-Bauteils, wobei der anschließende Transfer des Halbzeug-Bauteiles mit Hilfe der Transporteinrichtung entlang der Transferschienen zur Zerspanungsstation II erfolgt,
- in der Zerspanungsstation II erfolgt das Beschneiden und/oder Lochen des Halbzeug-Bauteils, wobei der anschließende Transfer des Halbzeug-Bauteiles mit Hilfe der Transporteinrichtung entlang der Transferschienen zur Heizstation II erfolgt,
- in der Heizstation II erfolgt das partielle Erwärmen des Halbzeug-Bauteils, wobei der anschließende Transfer des Halbzeug-Bauteiles mit Hilfe der Transporteinrichtung entlang der Transferschienen (zur Umformstation II erfolgt,
- in der Umformstation II erfolgt das partielle Umformen des Halbzeug-Bauteils und/oder das Hinzufügen zusätzlicher Bauteile, wobei der anschließende Transfer des fertigen Bauteiles mit Hilfe der Transporteinrichtung entlang der Transferschienen zur Ablagestufe erfolgt,
- in der Ablagestufe erfolgt die Übergabe des Bauteils an eine Fördereinrichtung zur weiteren Beförderung der Bauteile zu einer Sammelstelle und/oder Kontrollstation.

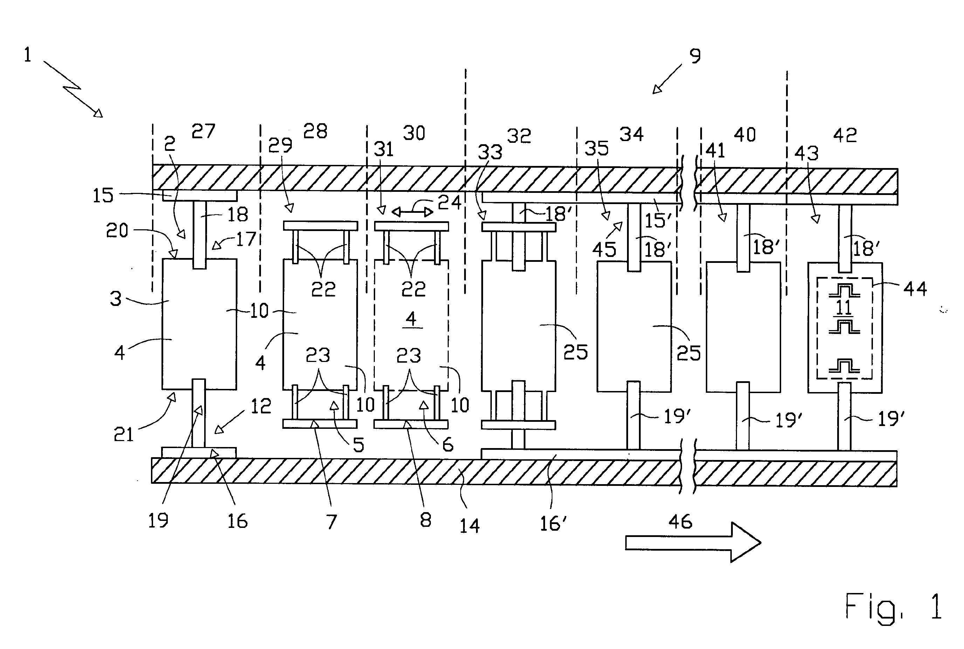

Die Erfindung betrifft auch eine Vorrichtung, insbesondere eine Fertigungsanlage, zur Herstellung von Bauteilen aus vorimprägnierten Halbzeugen und zur Durchführung des vorgenannten Verfahrens. Die Fertigungsanlage umfasst eine Reihe von Fertigungsstufen mit den entsprechenden Maschinenkomponenten und entsprechenden Werkzeugen, wie sie in der Figur 1 aufgeführt sind.

Ein konkretes Ausführungsbeispiel der Erfindung ist in den Zeichnungen rein schematisch dargestellt und wird nachfolgend näher beschrieben. Es zeigt:
Fig. 1 in schematischer Darstellung eine Transportvorrichtung der erfindungsgemäßen Fertigungsanlage in Draufsicht und
Fig.2 eine schematische Darstellung einer Transferpresse mit den erfindungsgemäßen Fertigungsstufen einer Fertigungsanlage.

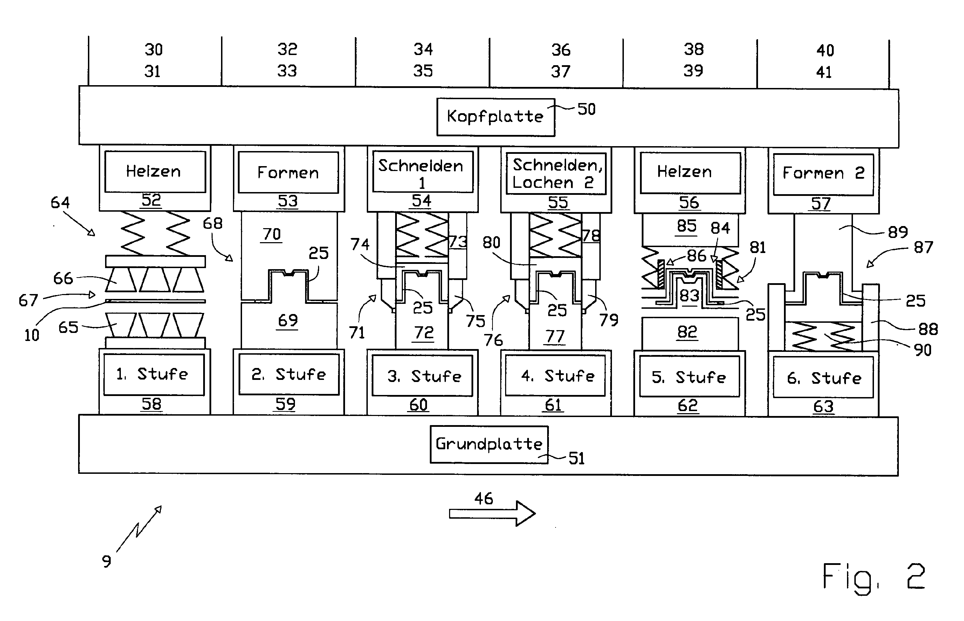

Die Fig.1 zeigt in schematischer Darstellung in einem Ausführungsbeispiel einen Teil einer erfindungsgemäßen Fertigungsanlage 1 mit erfindungsgemäßer Transportvorrichtung 12 in Draufsicht, welche Bestandteil der Fertigungsanlage 1 ist. Die Fertigungsanlage 1 zur Herstellung von faserverstärkten Kunststoffbauteilen **11** in Serienfertigung umfasst im Prinzip eine Bereitstellungsstufe 27, bestehend aus mindestens einem Rohlingspeicher 2, eine Bestückungsstufe 28, bestehend aus einer Aufnahmestation 29, eine Transferpresse 9, welche sechs Fertigungsstufen 30, 32 34, 36, 38, 40 umfasst, uzw. eine erste Fertigungsstufe 30, bestehend aus mindestens einer ersten Heizstation I 31, eine zweite Fertigungsstufe 32, bestehend aus einer ersten Umformstation I 33, eine dritte Fertigungsstufe 34, bestehend aus einer ersten Zerspanungsstation I 35, eine vierte Fertigungsstufe 36 (s.Fig.2), bestehend aus einer zweiten Zerspanungsstation II 37, eine fünfte Fertigungsstufe 38 (s.Fig.2), bestehend aus einer zweiten Heizstation 39, eine sechste Fertigungsstufe 40, bestehend aus einer zweiten Umformstation 41 und nach der Transferpresse 9 noch eine Förderstufe 42, bestehend aus einer Ablagestation 43, die aus einer Fördereinrichtung 44 besteht. Die Transportvorrichtung 12, die ebenfalls Bestandteil der Fertigungsanlage ist, besteht aus zwei Transferschienen 13, 14, die über alle Fertigungsstufen 27, 28, 30, 32, 34, 36, 38, 40, 42 durchgängig vorhanden ist und zwei Vorsatzschienen 15, 16, die mit Klemmgreifern 18, 19 ausgestattet sind, aufweist.

Die einzelnen Stationen 29, 31, 33, 35, 37, 39, 41, 43 der Fertigungsstufen 27, 28, 30, 32, 34, 36, 38, 40, 42, die in der Figur 1 nicht oder nur zum Teil aufgeführt sind, werden in der Figur 2 näher erläutert. Bezugszeichen in der Beschreibung der Figur 1 können in der Zeichnung der Figur 2 enthalten sein. Beide Figuren ergänzen sich und stellen die komplette Fertigungsanlage 1 dar. Einander entsprechende Bezugszeichen sind in den Figuren mit den gleichen Bezugszeichen versehen.

Der Rohlingspeicher 2 ist zwischen den beiden parallel beabstandeten Transferschienen 13, 14 angeordnet, wobei der Rohlingspeicher 2 als Stapelmagazin 3 ausgebildet ist. Das Stapelmagazin 3 dient der Aufnahme und Abgabe einer Vielzahl von zugeschnittenen Faser-Matrix-Halbzeugen 4. Die zugeschnittenen Faser-Matrix-Halbzeuge 4 bilden Tafeln 10, die in einer Vorrichtung (nicht dargestellt) flächig liegend in vertikaler Richtung gestapelt werden. Die oberste Tafel 10 wird in einer Entnahmeposition bereitgestellt. Zum Ergreifen und Transportieren der jeweils obersten Tafel 10 steht eine horizontal in zwei Richtungen verschiebbare Transportvorrichtung 12 zur Verfügung. Die Transportvorrichtung 12 ist zwischen den zwei parallel beabstandeten Transferschienen 13, 14 angeordnet und umfasst zwei horizontal verschiebbare Vorsatzschienen 15, 16, die mit bekannten Mitteln angetrieben werden. Des Weiteren ist an den Vorsatzschienen 15, 16 ein Entnahme-und Ablegemittel 17, bestehend aus mindestens einem Klemmgreifer 18, 19, vorzugsweise zwei mechanischen Klemmgreifern 18, 19, angeordnet. Jeweils ein Klemmgreifer 18, 19 ist an einer Vorsatzschiene 15, 16 angeordnet, wodurch eine Tafel 4 beim Ergreifen horizontal zwischen den Klemmgreifern 18, 19 zu liegen kommt. Die mechanischen Klemmgreifer 18, 19 erfassen die Tafel 10 zum Transport an den beiden Querseiten 20, 21. Nach dem Erfassen einer Tafel 4 kann die Transportvorrichtung 12, diese mit Hilfe der Vorsatzschienen 15, 16, horizontal entlang der Transferschienen 13, 14 zur nächsten Fertigungsstufe, der Bestückungsstufe 28, transportieren und dort ablegen. Die Transportvorrichtung 12 ist horizontal in zwei Richtungen zwischen der Bereitstellungsstufe 27, der Bestückungsstufe 28 und/oder der ersten Fertigungsstufe I 30 verschiebbar bzw. verfahrbar, angeordnet, wodurch die Transportvorrichtung 12 den Transfer der Tafeln 10 zwischen den Stufen 27, 28, 30, 32 vornehmen kann. Die Bestückungsstufe 28 entspricht einer Aufnahmestation 29 für eine Tafel 10, die aus einer Vorrichtung 5 gebildet wird. Die Vorrichtung 5 ist Träger eines Spannrahmens 7, wobei der Spannrahmen 7 die Tafel 10 mit Hilfe von mechanischen Greifern 22, 23 an den Querseiten 20, 21 spannt. Jeder Spannrahmen 7, 8 ist mit insgesamt vier Greifern 22, 23 ausgestattet, wobei zwei Greifer 22, 23 pro Querseite 20, 21 angeordnet sind. Die Vorrichtung 6 ist ebenfalls Träger eines Spannrahmens 8, wobei der Spannrahmen 8 ebenfalls zum Spannen einer Tafel 10 dient. Der Spannrahmen 7, 8 ist horizontal in zwei Richtungen 24 zwischen der Aufnahmestation 29, der Heizstation 31 und der Umformstation 33 verschiebbar bzw. verfahrbar, angeordnet, wodurch der Spannrahmen 7, 8 den Transfer der Tafeln 10 von der Bestückungs- 28 und der Fertigungsstufe 30 zur nächsten Fertigungsstufe 30, 32 vornehmen kann. Nur bei größeren Tafeln 10 kommt der Transfer mit dem Spannrahmen 7, 8 zwischen den Stationen 29, 31, 33 in Betracht, ansonsten wird der Transfer der Tafeln 10 über die Transportvorrichtung 12 vorgenommen. Die Automation des Transportes der Tafeln 10 erfolgt somit über die parallel beabstandeten Transferschienen 13, 14 oder in Kombination mit den verschiebbaren Spannrahmen 7, 8.

Der Transfer eines Halbzeug-Bauteiles 25 in der Transferpresse 9 aus der zweiten Fertigungsstufe 32 zur nächsten Fertigungsstufe 34 und zur übernächsten Fertigungsstufe 36 bis hin zur Förderstufe 42 erfolgt durch eine Transportvorrichtung II 45. Die Transportvorrichtung II 45 ist, wie die Transportvorrichtung I 12, mit zwei verschiebbaren Vorsatzschienen 15', 16' zwischen den beiden Transferschienen 13, 14 zum horizontalen Verfahren in zwei Richtungen angeordnet. Die beiden Vorsatzschienen 15', 16' weisen eine Länge auf, die der Länge der Transferpresse 9 entsprechen. An den Vorsatzschienen 15', 16' sind, zum Ergreifen und Ablegen der Halbzeug-Bauteile 25, pro Fertigungsstufe 32, 34, 36, 38, 40 zwei mechanische Klemmgreifer 18', 19' angeordnet. Die Transportvorrichtung 45 kann, nach dem Öffnen der Transferpresse 9, somit gleichzeitig in fünf Fertigungsstufen 32, 34, 36, 38, 40 ein Halbzeug-Bauteil 25 in den Stationen 33, 35, 37, 39, 41 ergreifen und getaktet um eine Fertigungsstufe 34, 36, 38, 40, 42 in Durchlaufrichtung 46 verschieben. Nach der Verschiebung der Transportvorrichtung 45 befindet sich ein Halbzeug-Bauteil 25, beispielsweise aus der Station 33, jetzt vor der Station 35, ein Halbzeug-Bauteil 25 aus der Station 35 befindet sich jetzt vor der Station 37 usw., während das fertige Bauteil 11 aus der Station 41 sich vor der Ablagestation 43 befindet. In dieser Endposition der Transportvorrichtung 45 werden die Halbzeug-Bauteile 25 in den nächsten Stationen 35, 37, 39, 41, 43 definiert abgelegt, um diese zu bestücken und um das fertige Bauteil 11 mit Hilfe einer Fördereinrichtung 44 abzutransportieren. Während des Schließhubes der Transferpresse 9 fährt die Transportvorrichtung 45 mit leeren Klemmgreifern 18', 19' wieder in ihre Ausgangsposition, entgegen der Durchlaufrichtung 46, zurück. D.h., die Transportvorrichtung 45 pendelt immer getaktet zwischen der Ausgangsposition, dem Ergreifen der Halbzeug-Bauteile 25 und der Endposition, dem Ablegen der Halbzeug-Bauteile 25 in der nächsten Fertigungsstufe und der Leerfahrt zur Ausgangsposition, hin und her. Die Halbzeug-Bauteile 25 werden somit von Fertigungsstufe zu Fertigungsstufe weitergeleitet. Die Automation des Transportes der Halbzeug-Bauteile 25 erfolgt somit über die parallel beabstandeten Transferschienen 13', 14'. Aus der nachstehenden Figur 2 ist der Fertigungsprozess in der Transferpresse 9 ersichtlich.

Aus der Fig.2 ist in schematischer Darstellung eine erfindungsgemäße öffnende- und schließende Transferpresse 9 zum Herstellen von faserverstärkten Kunststoffbauteilen ersichtlich. Das Ausführungsbeispiel zeigt im Wesentlichen eine hoch automatisierte Transferpresse 9. Die Automatisierung wird dadurch erreicht, das verschiedene Fertigungsstufen (1 bis 6) 30, 32, 34, 36, 38, 40 in einer Transferpresse 9 integriert wurden. Alle Fertigungsstufen 30, 32, 34, 36, 38, 40 sind somit Bestandteil der gesamten Fertigungsanlage 1. Beschreibungen und Angaben zur Fertigungsanlage 1 und zur Transportvorrichtung 12, 45, die identisch in der Fig.1 enthalten sind, werden in der Fig.2 nicht wiederholt aufgeführt und sind bei übereinstimmenden Elementen mit denselben Bezugszeichen gekennzeichnet.

Die Transferpresse 9 umfasst mindestens eine Heizstation I 31, eine Umformstation I 33, mindestens eine Zerspanungsstation I, II 35, 37, eine partielle Heizstation II 39 und eine partielle Umformstation II 41. Die Transferpresse 9 besteht ua. aus einer Kopf- 50 und einer Grundplatte 51, die aufeinander zuweisen. Die Kopf-50 und Grundplatte 51 sind Träger verschiedener Werkzeuge, die in den unterschiedlichen Fertigungsstufen 30, 32, 34, 36, 38, 40 zur Herstellung der FVK-Bauteile 11 benötigt werden. Die Kopfplatte 51 ist Träger aller Werkzeugoberteile 52, 52, 54, 55, 56, 57 und die Grundplatte ist Träger aller Werkzeugunterteile 58, 59, 60, 61, 62, 63.

Die erste Fertigungsstufe 30 in der Transferpresse 9 entspricht der Heizstation I 31. Das Werkzeug 64 der Heizstation I 31 besteht aus einem unteren Heizfeld 65, das sich stationär auf einem Unterteil 58 befindet, welches auf der Grundplatte 51 steht und einem oberen Heizfeld 66, das oberhalb des Spannrahmens aufgehängt ist. Das obere- 66 und untere Heizfeld 65 sind voneinander beabstandet und bilden somit einen Spalt 67. Der Spalt 67 ist derart gestaltet, dass er eine Tafel 10 aufnehmen kann, wobei die Oberflächen der Tafel 10 von den beiden Heizfeldern 65, 66 einen bestimmten Betrag entfernt sind.

Die zweite Fertigungsstufe 32 entspricht der Umformstation I 33. Das Werkzeug 68 der Umformstation I 33 besteht aus einem unteren Stempel 69, der sich stationär auf einem Unterteil 59 befindet, welches auf der Grundplatte 51 steht und einer oberen Matrize 70, welche am Oberteil 53 befestigt ist, das an der Kopfplatte 50 der Transferpresse 9 angeordnet ist. Beim Pressvorgang fährt die Matrize 70 auf den Stempel 69 und formt die Tafel 10 zu einem Halbzeug-Bauteil 25. Nicht dargestellt ist, dass im Bereich des Stempels 69, je nach Bauteilgeometrie, mit einem zusätzlichen distanzierten Blechhalter oder Faltenhalter gearbeitet werden kann.

Die dritte Fertigungsstufe 34 entspricht der Zerspanungsstation I 35. Das Werkzeug 71 der Zerspanungsstation I 35 besteht aus einer unteren Schnittmatrize 72, die stationär auf einem Unterteil 60 angeordnet ist, welches auf der Grundplatte 51 steht und einer oberen Aufbauplatte 73, welche am Oberteil 54 befestigt ist, wobei das Oberteil 54 an der Kopfplatte 50 der Transferpresse 9 angeordnet ist. Unterhalb der Aufbauplatte 73, an der, der Schnittmatrize 72 zugewandten Seite, ist ein Schnittmesser 75 angeordnet. Des Weiteren umfasst die Aufbauplatte 73 einen, in der Aufbauplatte 73 federnd gelagerten Niederhalter 74, der ein eingespanntes Halbzeug-Bauteil 25 fixiert, sodass ein Schnittmesser 75 beim senkrechten Schneidevorgang die Kontur eines Halbzeug-Bauteiles 25 erstellen kann. Nicht dargestellt ist, dass die Schnittmesser75 einen Wellenschnitt und eine Beschichtung aufweisen können, wodurch höhere Standzeiten des Werkzeuges erreicht werden.

Die vierte Fertigungsstufe 36 entspricht der zweiten Zerspanungsstufe 37. Das Werkzeug 76 der Zerspanungsstufe II 37 besteht aus einer unteren Schnittmatrize 77, die stationär auf einem Unterteil 61, welches auf der Grundplatte 51 steht und einer oberen Aufbauplatte 78 angeordnet ist, welche am Oberteil 55 befestigt ist, wobei das Oberteil 55 an der Kopfplatte 50 der Transferpresse 9 angeordnet ist. Unterhalb der Aufbauplatte 78, an der, der Schnittmatrize 77 zugewandten Seite, ist ein Schnittmesser 79 angeordnet. Des Weiteren umfasst die Aufbauplatte 78 einen, in der Aufbauplatte 78 federnd gelagerten Niederhalter 80, der ein eingespanntes Halbzeug-Bauteil 25 fixiert, sodass ein Schnittmesser 79 beim Schneidevorgang einen weitere Beschneidung an der Kontur eines Halbzeug-Bauteiles 25 vornehmen kann. Nicht dargestellt ist, dass in dieser Zerspanungsstufe II 37 auch ein Lochen und ein Schneiden in abgewinkelten Bereichen, sogenannte Schiebeoperationen, des Halbzeug-Bauteiles 25 erfolgen kann. Die Zerspanungsstufe II 37 weist dazu ein Beschneidewerkzeug auf, welches Schneideoperationen in Arbeits- und Schieberichtung durchführen kann.

Die fünfte Fertigungsstufe 38 entspricht der zweiten Heizstation 39. Das Werkzeug 81 der Heizstation II 39 umfasst eine isolierende untere Zwischenplatte 82, die sich stationär auf einem Unterteil 62 befindet, das auf der Grundplatte 51 der Transferpresse 9 steht und ein Formwerkzeug 83, welches ein Halbzeug-Bauteil 25 aufnimmt, wobei das Formwerkzeug 83 durch ein Heizfeld 84 umschlossen ist, welches federnd an einer isolierenden oberen Zwischenplatte 85 hängt, die am Oberteil 56 befestigt ist, wobei das Oberteil 56 an der Kopfplatte 50 der Transferpresse 9 angeordnet ist. Die Strahlungsheizelemente 86 werden oberhalb der formschlüssigen dünnwandigen Stahlformaufnahme des Formwerkzeuges 83 angeordnet. Im Bereich der Strahlungsheizelemente 86 ist die Formaufnahme freigemacht, um eine definierte Wärme des weiter zu verformenden Halbzeug-Bauteiles 25 zu erreichen.

Die sechste Fertigungsstufe 40 entspricht der zweiten Umformstation 41. Das Werkzeug 87 der Umformstation II 41 besteht aus Abstellbacken 88, die stationär auf einem Unterteil 60 angeordnet sind, welches auf der Grundplatte 51 steht und einem oberen Stempel 89, der am Oberteil 57 befestigt ist, welches an der Kopfplatte 50 der Transferpresse 9 angeordnet ist. Die Abstellbacken 88 umfassen einen Federboden 90, der federnd zwischen den Abstellbacken 88 geführt wird und der ein eingespanntes Halbzeug-Bauteil 25 fixiert, sodass der Stempel 89 beim Niederdrücken gegen den Federboden 90 an den Abstellbacken 88 entlang fährt. In diesem Beispiel werden die Kanten des Halbzeug-Bauteiles 25 hochgestellt, bzw. umgebogen. Nicht dargestellt ist, dass weitere nachgeschaltete Formoperationen durchgeführt werden können. Des Weiteren besteht in dieser Fertigungsstufe 40, anstelle von Formänderungen am Halbzeug-Bauteil 25 vorzunehmen, die Möglichkeit zusätzliche Bauteile hinzuzufügen. Dann würde es sich um eine Fügestufe handeln, die es ermöglicht, zusätzlich Bauteile 26 an das Halbzeug-Bauteil 25 durch z.B. Nieten, Kleben oder Schweiβen zu integrieren, wodurch ein fertiges, komplexes Bauteil 11 entsteht.

### Bezugszeichenliste

- 1: Fertigungsanlage
- 2: Rohlingspeicher
- 3: Stapelmagazin
- 4: Halbzeuge
- 5: Vorrichtung I
- 6: Vorrichtung 11
- 7: Spannrahmen I
- 8: Spannrahmen II
- 9: Transferpresse
- 10: Tafel
- 11: Kunststoffbauteile
- 12: Transportvorrichtung I
- 13: Transferschiene I
- 14: Transferschiene II
- 15: Vorsatzschiene I
- 16: Vorsatzschiene II
- 17: Entnahme-u. Ablegemittel
- 18: Klemmgreifer I
- 19: Klemmgreifer II
- 20: Querseite I
- 21: Querseite II
- 22: mechanischer Greifer
- 23: mechanischer Greifer
- 24: Richtung
- 25: Halbzeug-Bauteil
- 26: zusätzl. Bauteile
- 27: Bereitstellungsstufe
- 28: Bestückungsstufe
- 29: Aufnahmestation

- 31: Heizstation
- 32: Fertigungsstufe 2
- 33: Umformstation I
- 34: Fertigungsstufe 3
- 35: Zerspanungsstation I
- 36: Fertigungsstufe 4
- 37: Zerspanungsstufe II
- 38: Fertigungsstufe 5
- 39: Heizstation II
- 40: Fertigungsstufe 6
- 41: Umformstation II
- 42: Förderstufe
- 43: Ablagestation
- 44: Fördereinrichtung
- 45: Transportvorrichtung II
- 46: Durchlaufrichtung
- 47 48 49 50: Kopfplatte
- 51: Grundplatte
- 52: Werkzeugoberteil 1
- 53: Werkzeugoberteil 2
- 54: Werkzeugoberteil 3
- 55: Werkzeugoberteil 4
- 56: Werkzeugoberteil 5
- 57: Werkzeugoberteil 6
- 58: Werkzeugunterteil 1
- 59: Werkzeugunterteil 2
- 30: Fertigungsstufe 1
- 61: Werkzeugunterteil 4
- 62: Werkzeugunterteil 5
- 63: Werkzeugunterteil 6
- 64: Werkzeug (v.31)
- 65: unteres Heizfeld
- 66: oberes Heizfeld
- 67: Spalt
- 68: Werkzeug (v.33)
- 69: Stempel
- 70: Matrize
- 60: Werkzeugunterteil 3

## Patentansprüche

1. Verfahren zum Herstellen von Bauteilen (11) aus faserverstärkten, thermoplastischen Halbzeugen (4) in einer Fertigungsanlage (1) mit den folgenden Schritten:
a) Bereitstellung von Halbzeugen (4) in mindestens einem Rohlingspeicher (2)
b) Erfassen eines Halbzeuges (4) mit Hilfe eines, an einer Transportvorrichtung (12) angeordneten Entnahme- und Ablegemittels (17) und Transportieren des Halbzeuges (4) mit Hilfe einer, an einer verschiebbaren Transportvorrichtung (12) angeordneten Vorsatzschiene (15, 16) entlang einer Transferschiene (13, 14) und Ablegen des Halbzeuges (4) in eine erste Vorrichtung I (5) mit Spannrahmen I (7) und Spannen des Halbzeuges (4) in diesem Spannrahmen I (7) mit Hilfe mechanischer Greifer (22, 23), **dadurch gekennzeichnet, dass**
c) eine zweite Vorrichtung II (6) mit Spannrahmen II (8) mit einem Halbzeug (4) bestückt wird und das Halbzeug (4) mit Hilfe der mechanischen Greifer (22, 23) im Spannrahmen (8) gespannt wird, wobei der Spannrahmen (8) den Transfer des Halbzeuges (4) zur Heizstation I (31), die sich in einer getakteten Transferpresse (9) befindet, übernimmt,
d) in der Heizstation I (31) erfolgt das Erwärmen des Halbzeuges (4), das nach dem Erwärmen mit Hilfe des Spannrahmentransfers (8) oder der Transportvorrichtung (12) in der Transferpresse (9) der Umformstation (33) zugeführt wird,
e) in der Umformstation I (33) erfolgt das Umformen des vorgewärmten Halbzeuges (4) zu einem Halbzeug-Bauteil (25), wobei der anschließende Transfer des Halbzeug-Bauteiles (25) mit Hilfe der Transporteinrichtung (45) entlang der Transferschienen (13, 14) zur Zerspanungsstation I (35) erfolgt,
f) in der Zerspanungsstation I (35) erfolgt der Zuschnitt der Außenkontur des Halbzeug-Bauteils (25), wobei der anschließende Transfer des Halbzeug-Bauteiles (25) mit Hilfe der Transporteinrichtung (45) entlang der Transferschienen (13, 14) zur Zerspanungsstation II (37) erfolgt,
g) in der Zerspanungsstation II (37) erfolgt das Beschneiden und/oder Lochen des Halbzeug-Bauteils (25), wobei der anschließende Transfer des Halbzeug-Bauteiles (25) mit Hilfe der Transporteinrichtung (45) entlang der Transferschienen (13, 14) zur Heizstation II (39) erfolgt,
h) in der Heizstation II (39) erfolgt das partielle Erwärmen des Halbzeug-Bauteils (25), wobei der anschließende Transfer des Halbzeug-Bauteiles (25) mit Hilfe der Transporteinrichtung (45) entlang der Transferschienen (13, 14) zur Umformstation II (41) erfolgt,
i) in der Umformstation II (41) erfolgt das partielle Umformen des Halbzeug-Bauteils (25) und/oder das Hinzufügen zusätzlicher Bauteile (26), wobei der anschließende Transfer des fertigen Bauteiles (11) mit Hilfe der Transportvorrichtung (45) entlang der Transferschienen (13, 14) zur Ablagestation (43) erfolgt,
j) in der Ablagestation (43) erfolgt die Übergabe des Bauteils (25) an eine Fördereinrichtung (44) zur weiteren Beförderung der Bauteile (11) zu einer Sammelstelle und/oder Kontrollstation.

2. Verfahren nach Anspruch 1, **dadurch gekennzeichnet, dass** die Erwärmung des Halbzeuges (4) in der Heizstation I (31) durch den Hub des gefederten Heizfeldes (x) gesteuert wird.

3. Verfahren nach Anspruch 1 bis 2, **dadurch gekennzeichnet, dass** der Arbeitszyklus der Fertigungsstufen 1 bis 6 (30, 32, 34, 36, 38, 40) in der Transferpresse (9) gleich ist.

4. Vorrichtung, insbesondere Fertigungsanlage (1), zum Herstellen von Bauteilen (11) aus faserverstärkten, thermoplastischen Halbzeugen (4), vorzugsweise zur Durchführung des Verfahrens nach Anspruch 1, wobei die Fertigungsanlage (1) folgende Maschinenkomponenten umfasst,
a) zwei Transferschienen (13, 14) die parallel beabstandet sind und zwischen denen mindestens ein Rohlingspeicher (2), der als Stapelmagazin (3) zur Aufnahme zugeschnittener Halbzeuge (4) ausgebildet ist,
b) eine Vorrichtung I (5) und eine Vorrichtung II (6), ausgestattet mit einem Spannrahmen (7, 8), wobei der Spannrahmen (7, 8) mit mechanischen Greifern (22, 23) zum Spannen der Halbzeuge (4) ausgebildet ist,
c) eine öffnende- und schließbare Transferpresse (9), die mindestens mit einer Heizstation I (31), einer Umformstation I (33), mindestens einer Zerspanungsstation I, II (35, 37), einer partiellen Heizstation II (39) und einer partiellen Umformstation II (41) ausgebildet ist
d) eine Ablagestation (43), die aus einer Fördereinrichtung (44) besteht,
e) wobei zwischen dem Rohlingspeicher 82) und der Ablagestation (43) mindestens eine Transportvorrichtung (12, 45) in zwei Richtungen horizontal verschiebbar, angeordnet ist.

5. Vorrichtung nach Anspruch 4, **dadurch gekennzeichnet, dass** das Stapelmagazin (3) eine Vorrichtung aufweist, welche eine Vielzahl von Halbzeugen (4), flächig liegend und in vertikaler Richtung gestapelt, enthält und in einer Entnahmeposition vorhält.

6. Vorrichtung nach mindestens einem der vorhergehenden Ansprüche, **dadurch gekennzeichnet, dass** zwischen den Transferschienen (14, 15) die über alle Fertigungstufen (27), (28), (30), (32), (34), (36), (38), (40) hinweg durchgängig vorhanden ist, eine Transportvorrichtung (12) bestehend aus mindestens einer Vorsatzschiene (14, 15) und einem Entnahme- und Ablegemittel (17), welche mindestens einen Klemmgreifer (18, 19) aufweisen, angeordnet ist.

7. Vorrichtung nach mindestens einem der vorhergehenden Ansprüche, **dadurch gekennzeichnet, dass** eine Transportvorrichtung (12) horizontal in zwei Richtungen zwischen der Bereitstellungsstufe (27), der Bestückungsstufe (28) und/oder der ersten Fertigungsstufe I (30) verschiebbar angeordnet ist.

8. Vorrichtung nach mindestens einem der vorhergehenden Ansprüche, **dadurch gekennzeichnet, dass** der Spannrahmen (7, 8) horizontal in zwei Richtungen (24) zwischen der Aufnahmestation (29), der Heizstation I (31) und der Umformstation (33) verschiebbar angeordnet ist.

9. Vorrichtung nach mindestens einem der vorhergehenden Ansprüche, **dadurch gekennzeichnet, dass** das Werkzeug (64) der Heizstation I (31) aus einem unteren Heizfeld (65), das stationär auf einem Unterteil (58), welches auf der Grundplatte (51) steht und einem oberen Heizfeld (66), das federnd am Oberteil (52) aufgehängt ist, welches an der Kopfplatte (50) der Transferpresse (9) angeordnet ist, gebildet wird.

10. Vorrichtung nach mindestens einem der vorhergehenden Ansprüche, **dadurch gekennzeichnet, dass** das Werkzeug (76) der Zerspanungsstufe II (37) ein Beschneidewerkzeug ist, welches Schneideoperationen in Arbeits- und Schieberichtung durchführt.

11. Vorrichtung nach mindestens einem der vorhergehenden Ansprüche, **dadurch gekennzeichnet, dass** das Werkzeug (81) der Heizstation II (31) eine isolierende Zwischenplatte (82), die auf einem Unterteil (62) angeordnet ist, welches auf der Grundplatte (51) der Transferpresse (9) steht und ein Formwerkzeug (83), welches ein Halbzeug-Bauteil (25) aufnimmt, wobei das Formwerkzeug (83) durch ein Heizfeld (84) umschlossen ist, welches federnd an einer isolierenden Zwischenplatte (85) hängt, die am Oberteil (56) befestigt ist, umfasst.

## Claims

1. A method for producing components (11) from fibre-reinforced thermoplastic semi-finished products (4) in a production plant (1) with the following steps:
a) providing semi-finished products (4) in at least one blank store (2)
b) capturing a semi-finished product (4) with the help of a removal and placement means (17) arranged on a transport device (12) and transporting the semi-finished product (4) with the help of an attachment rail (15, 16) arranged on a displaceable transport device (12) along a transfer rail (13, 14) and placing the semi-finished product (4) into a first device I (5) with clamping frame I (7) and clamping of the semi-finished product (4) in this clamping frame I (7) with the help of mechanical grippers (22, 23), **characterized in that**
c) a second device II (6) with clamping frame II (8) is loaded with a semi-finished product (4) and the semi-finished product (4) is clamped in the clamping frame (8) with the help of the mechanical grippers (22, 23), wherein the clamping frame (8) takes over the transfer of the semi-finished product (4) to the heating station I (31), which is located in a clogged transfer press (9).
d) In the heating station I (31), the semi-finished product (4) is heated, which following the heating is fed to the forming station (33) with the help of the clamping frame transfer (8) or the transport device (12) in the transfer press (9),
e) in the forming station I (33), the forming of the preheated semi-finished product (4) into a semi-finished component (25) takes place, wherein the subsequent transfer of the semi-finished component (25) takes place with the help of the transport device (45) along the transfer rails (13, 14) to the cutting station I (35),
f) in the cutting station I (35), the cutting of the outer contour of the semi-finished component (25) takes place, wherein the subsequent transfer of the semi-finished component (25) to the cutting station II (37) takes place with the help of the transport device (45) along the transfer rails (13, 14).
g) In the cutting station II (37), the trimming and/or perforating of the semi-finished component (25) takes place, wherein the subsequent transfer of the semi-finished component (25) to the heating station II (39) takes place with the help of the transport device (45) along the transfer rails (13, 14),
h) in the heating station II (39), the partial heating of the semi-finished component (25) takes place, wherein the subsequent transfer or the semi-finished component (25) to the forming station II (41) takes place with the help of the transport device (45) along the transfer rails (13, 14),
i) in the forming station II (41), the partial forming of the semi-finished component (25) and/or the joining of additional components (26) takes place, wherein the subsequent transfer of the finished component (11) to the placement station (43) takes place with the help of the transport device (45) along the transfer rails (13, 14),
j) in the placement station (43) the transfer of the component (25) to a conveying device (44) for the further conveying of the components (11) to a collecting point and/or control station takes place.

2. The method according to Claim 1, **characterized in that** the heating of the semi-finished product (4) in the heating station I (31) is controlled through the stroke of the spring-loaded heating field (x).

3. The method according to Claim 1 to 2, **characterized in that** the working cycle of the production steps 1 to 6 (30, 32, 34, 36, 38, 40) in the transfer press (9) is equal.

4. A device, in particular production plant (1), for producing components (11) of fibre-reinforced, thermoplastic semi-finished products (4), preferentially for carrying out the method according to Claim 1, wherein the production plant (1) comprises the following machine components,
a) two transfer rails (13, 14) which are spaced in parallel and between which at least one blank store (2), which is formed as a stack magazine (3) for receiving semi-finished products (4) cut to size,
b) a device I (5) and a device II (6), equipped with a clamping frame (7, 8), wherein the clamping frame (7, 8) is formed with mechanical grippers (22, 23) for clamping the semi-finished products (4),
c) a transfer press (9) that can open and close, which is formed with at least one heating station I (31), a forming station I (33), at least one cutting station I, II (35, 37), a partial heating station II (39) and a partial forming station II (41),
d) a placement station (43), which consists of a conveying device (44),
e) wherein between the blank store (2) and the placement station (43) at least one transport device (12, 45) is horizontally displaceably arranged in two directions.

5. The device according to Claim 4, **characterized in that** the stack magazine (3) comprises a device, which contains a multiplicity of semi-finished products (4) lying flat and stacked in vertical direction, and which keeps these ready in a removal position.

6. The device according to at least one of the preceding claims, **characterized in that** between the transfer rails (14, 15) which are present throughout across all production stages (27), (28), (30), (34), (36), (38), (40), a transport device (12) consisting of at least one attachment rail (14, 15) and a removal and placement means (17), which comprise at least one clamping gripper (18, 19) is arranged.

7. The device according to at least one of the preceding claims, **characterized in that** a transport device (12) is arranged horizontally displaceably in two directions between the provision stage (27), the loading stage (28) and/or the first production stage I (30).

8. The device according to at least one of the preceding claims, **characterized in that** the clamping frame (7, 8) is horizontally displaceably arranged in two directions (24) between the receiving station (29), the heating station I (31) and the forming station (33).

9. The device according to at least one of the preceding claims, **characterized in that** the tool (64) of the heating station I (31) formed of a lower heating field (65) which is stationarily arranged on a lower part (58), which stands on the baseplate (51) and an upper heating field (66), which is resiliently suspended from the upper part (52), which is arranged on the head plate (50) of the transfer press (9).

10. The device according to at least one of the preceding claims, **characterized in that** the tool (76) of the cutting stage II (37) is a trimming tool, which carries out cutting operations in working and pushing direction.

11. The device according to at least one of the preceding claims, **characterized in that** the tool (81) of the heating station II (31) comprises an insulating intermediate plate (82), which is arranged on a lower part (62), which stands on the baseplate (51) of the transfer press and a forming tool (83), which receives a semi-finished component (25), wherein the forming tool (83) is enclosed by a heating field (84), which is resiliently suspended from an insulating intermediate plate (85), which is fastened to the upper part (56).

## Revendications

1. Procédé pour fabriquer des composants (11) à base de semi-produits (4) thermoplastiques renforcés en fibres dans une installation de fabrication (1) avec les étapes suivantes :
a) mise à disposition de semi-produits (4) dans au moins un réservoir d'ébauches (2),
b) saisie d'un semi-produit (4) à l'aide d'un moyen de prélèvement et de dépôt (17) disposé sur un dispositif de transport (12) et transport du semi-produit (4) à l'aide d'un rail adaptable (15, 16), disposé sur un dispositif de transport déplaçable (12), le long d'un rail de transfert (13, 14) et dépôt du produit semi-fini (4) dans un premier dispositif I (5) avec armature de serrage I (7) et serrage du semi-produit (4) dans cette armature de serrage I(7) à l'aide de pinces mécaniques (22, 23), **caractérisé en ce que**
c) un deuxième dispositif II (6) avec armature de serrage II (8) est chargé avec un semi-produit (4) et **en ce que** le semi-produit (4) est serré à l'aide des pinces mécaniques (22, 23) dans l'armature de serrage (8), moyennant quoi l'armature de serrage (8) assure le transfert du semi-produit (4) vers la station de chauffage I (31), laquelle se trouve dans une presse de transfert (9) cadencée,
d) l'échauffement du semi-produit (4) ayant lieu dans la station de chauffage I (31), lequel semi-produit est amené après l'échauffement à la station de formage (33) à l'aide du transfert d'armature de serrage (8) ou du dispositif de transport (12) dans la presse de transfert (9),
e) le formage du semi-produit (4) préchauffé ayant lieu dans la station de formage I (33) pour donner un composant de semi-produit (25), le transfert qui s'en suit du composant de semi-produit (25) ayant lieu à l'aide du dispositif de transport (45) le long des rails de transfert (13, 14) jusqu'à la station d'enlèvement de copeaux I (35),
f) la découpe du contour extérieur du composant de semi-produit (25) ayant lieu dans la station d'enlèvement de copeaux I(35), le transfert qui s'en suit du composant de semi-produit (25) s'effectuant à l'aide du dispositif de transport (45) le long des rails de transfert (13, 14) vers la station d'enlèvement de copeaux II (37),
g) le rognage et/ou le trouage du composant de semi-produit (25) ayant lieu dans la station d'enlèvement de copeaux II (37), le transfert qui s'en suit du composant de semi-produit (25) s'effectuant à l'aide du dispositif de transport (45) le long des rails de transport (13 , 14) jusqu'à la station de chauffage II (39),
h) l'échauffement partiel du composant de semi-produit (25) ayant lieu dans la station de chauffage II (39), le transfert qui s'en suit du composant de semi-produit (25) s'effectuant à l'aide du dispositif de transport (45) le long des rails de transfert (13, 14) vers la station de formage II (41),
i) le formage partiel du composant de semi-produit (25) et/ou l'ajout de composants supplémentaires (26) ayant lieu dans la station de formage II (41), le transfert qui s'en suit du composant parachevé (11) s'effectuant à l'aide du dispositif de transport (45) le long des rails de transfert (13, 14) vers la station d'entreposage (43),
j) la délivrance du composant (25) à un dispositif d'acheminement (44) s'effectuant dans la station d'entreposage (43) afin de poursuivre l'acheminement des composants (11) vers un lieu de collecte et/ou une station de contrôle.

2. Procédé selon la revendication 1, **caractérisé en ce que** l'échauffement du semi-produit (4) dans la station de chauffage I (31) est commandé par la course du champ de chauffage (x) élastique.

3. Procédé selon les revendications 1 à 2, **caractérisé en ce que** le cycle de travail des étapes de fabrication 1 à 6 (30, 32, 34, 36, 38, 40) est identique dans la presse de transfert (9).

4. Dispositif, en particulier installation de fabrication (1), pour la fabrication de composants (11) à base de semi-produits (4) thermoplastiques renforcés en fibres, de préférence pour mettre en oeuvre le procédé selon la revendication 1, l'installation de fabrication (1) comprenant les pièces de machine suivantes :
a) deux rails de transfert (13, 14) espacées en parallèle et entre lesquels est réalisé au moins un réservoir d'ébauches (2) réalisé en tant que magasin d'empilage (3) pour la réception de semi-produits (4) découpés,
b) un dispositif I (5) et un dispositif II (6), équipés d'une armature de serrage (7, 8), l'armature de serrage (7, 8) étant réalisée avec des pinces mécaniques (22, 23) pour le serrage des semi-produits (4),
c) une presse de transfert (9) pouvant être ouverte et fermée, laquelle est réalisée avec au moins une station de chauffage I (31), une station de formage I (33), au moins une station d'enlèvement de copeaux I, II (35, 37), une station de chauffage partiel II (39) et une station de formage partiel II (41),
d) une station d'entreposage (43), laquelle se compose d'un dispositif d'acheminement (44),
e) au moins un dispositif de transport (12, 45) étant disposé de manière déplaçable horizontalement dans deux directions entre le réservoir d'ébauches (2) et la station d'entreposage (43).

5. Dispositif selon la revendication 4, **caractérisé en ce que** le magasin d'empilage (3) présente un dispositif qui contient une pluralité de semi-produits (4) empilés en reposant à plat et en direction verticale, et les met à disposition dans une position de prélèvement.

6. Dispositif selon l'une au moins des revendications précédentes, **caractérisé en ce que** l'on met en place, entre les rails de transfert (14, 15) lesquels sont présents sans interruption tout au long de l'ensemble des étapes de fabrication (27), (28), (30), (32), (34), (36), (38), (40), un dispositif de transport (12) se composant au moins d'un rail adaptable (14, 15) et d'un moyen de prélèvement et de dépôt (17), lesquels présentent au moins une pince de serrage (18, 19).

7. Dispositif selon au moins l'une des revendications précédentes, **caractérisé en ce qu'**un dispositif de transport (12) est disposé de manière déplaçable horizontalement dans deux directions entre l'étape de mise à disposition (27), l'étape de charge (28) et/ou la première étape de fabrication I (30).

8. Dispositif selon au moins l'une des revendications précédentes, **caractérisé en ce que** l'armature de serrage (7, 8) est disposée de manière déplaçable horizontalement dans deux directions (24) entre la station de réception (29), la station de chauffage I (31) et la station de formage (33).

9. Dispositif selon au moins l'une des revendications précédentes, **caractérisé en ce que** l'outillage (64) de la station de chauffage I (31) est formé par un champ de chauffage inférieur (65) stationnaire sur un dessous (58), lequel est érigé sur la plaque de base (51), et par un champ de chauffage supérieur (66) suspendu élastiquement sur le dessus (52), lequel est disposé sur la plaque de tête (50) de la presse de transfert (9).

10. Dispositif selon au moins l'une des revendications précédentes, **caractérisé en ce que** l'outillage (76) de l'étape d'enlèvement de copeaux II (37) est un outil de rognage qui effectue des opérations de coupe en direction de travail et de déplacement.

11. Dispositif selon au moins l'une des revendications précédentes, **caractérisé en ce que** l'outillage (81) de la station de chauffage II (31) comprend une plaque intermédiaire (82) isolante, laquelle est disposée sur un dessous (62), lequel se dresse sur la plaque de base (51) de la presse de transfert (9), et un outil de formage (83), lequel réceptionne un composant de semi-produit (25), l'outil de formage (83) étant entouré par un champ de chauffage (84), lequel est suspendu élastiquement à une plaque intermédiaire (85) isolante, laquelle est fixée sur le dessus (56).
